# EUROPEAN PATENT APPLICATION

(11) **EP 1 234 489 A2**
(43) Date of publication of application: **28.08.2002**
(21) Application number: 02003937.6
(22) Date of filing: 22.02.2002
(51) Int. Cl.: A01C 5/06, A01C 7/04

(54) **Device for discrete distribution of granules**

(30) Priority: 22.02.2001 SE 0100600
(71) Applicant: Väderstad-Verken AB, 590 21 Väderstad (SE)
(72) Inventor: Stark, Christer, 590 21 Väderstad (SE)
(74) Representative: Stein, Jan Anders Lennart

(57) **Abstract**

An apparatus for discrete distribution of granules, such as seed, fertiliser or the like, comprising at least one inlet member (3) adapted to be associated with a granules container of an agricultural machine, and at least one outlet member (4) adapted to be associated with a coulter (13) of the agricultural machine. According to the invention, a distributing member (6) is provided with a surface, which is arranged substantially orthogonal to a central vertical axis and which is adapted to receive granules delivered from the inlet, and a first guide means (7, 8) arranged to guide the granules received on the distributing member (6) towards the outlet member (4), said first guide means (7, 8) being arranged eccentrically with respect to the axis in order to distribute and guide the granules towards the outlet member (4) piece by piece.

The invention also relates to an agricultural machine (10) provided with such an apparatus.

## Description

The present invention relates to an apparatus for discrete distribution of granules, such as seed, fertiliser or the like, said apparatus comprising at least one inlet member adapted to be associated with a granules container, and at least one outlet member adapted to be associated with a coulter.

The invention also relates to an agricultural machine comprising a granules container for granules, such as seed, fertiliser or the like, a coulter for placing granules at a predetermined depth in the soil, comprising such an apparatus for distribution of granules, said apparatus for distribution of granules being associated with the container and with the coulter.

Such a device for distributing granules and such an agricultural machine is known from EP-A-0 350 634, EP-A-0 583 571 and DE-C-196 36 787, respectively. The devices described in these documents suffer from the disadvantage that the respective granules are not distributed evenly in the soil.

For as long man has been producing sowing machinery, there has always been a need to improve the distribution of the seeds in the seed rows. Known mechanical and pneumatic systems give an uneven distribution of the granules in a furrow in the soil worked by a seed coulter or a fertiliser coulter. The granules tend to collect near to each other or to be set too far apart from each other. Maize and soya among other crops are sensitive to uneven distribution, for which reason precision sowing machines, which are expensive and slow, are used for such crops.

An object of the present invention is to obtain substantially the same growth conditions in the form of light, water and nutrition for the plants. This has been achieved with an agricultural machine and an apparatus of the type mentioned at the outset, which additionally comprises a distributing member with a surface, which is arranged substantially orthogonal to a central, vertical axis and which is adapted to receive granules supplied from the inlet member, and a first guide means arranged to guide the granules received on the distributing member towards the outlet member, said first guide means being arranged eccentrically with respect to the axis in order to distribute and guide the granules towards the outlet member piece by piece. An even distribution of the granules is achieved in this way.

The distributing member is advantageously rotatable about said axis, the first guide means being fixed relative to the inlet member. A movement of the distributing member relative to the first guide means is obtained in this way.

The first guide means preferably comprises a first guide member, which leads the granules towards the outlet member. Alternatively, or in addition to this, the first guide means comprises a second guide member, the first guide member being arranged on one side of a vertical plane through the distributing member along the axis, and the second guide member being arranged on the other side of the vertical plane. Here, the second guide member guides the granules towards the first guide member. This results in a transport of the granules from the periphery of the distributing member on one side of the axis to the periphery on the other side of the axis.

The second guide member preferably has a concave guide surface in the direction of rotation of the distributing member, while the first guide member has a convex guide surface in said direction of rotation. This results in an adaptation to the different relative speeds, which prevail at different distances from a centre of rotation. Alternatively, the guide surfaces can be straight or comprise a plurality of straight portions, which together form angles to each other, but a better result is achieved with concave/convex surfaces.

The speed of rotation of the distributing member is advantageously proportional to the supply of granules through the inlet. This is performed by means of a calibration test for determining the delivery speed for the seed or artificial fertiliser being used. Alternatively, or in addition to this, the speed of rotation of the distributing member is proportional to the transport speed of the agricultural machine. The speed of distribution can be set in this way.

In this connection, a ground radar may for instance be used, the signal of which is used for this purpose. Alternatively, a wheel provided with a speed sensor is used.

The distributing member is preferably associated with a driving device for generating vibration of the distributing member. This affords an alternative solution to the rotating distributing member.

At least one driving device is preferably associated with the distributing member. In particular, the driving device is a turbine arranged in the inlet member. Alternatively, the driving device is an electric motor.

The distributing device is preferably a substantially circular plate.

The second guide means advantageously comprises a second guide member arranged to retain the granules in the distributing member, at least in proximity to the outlet member.

The second guide member preferably covers substantially the whole surface of the distributing member.

The second guide member preferably comprises a flexile member, such as a net or a piece of foam rubber fixed relative to the inlet member. In this way it is possible to prevent any movements of the granules in the vertical direction, caused for example by the movement of the agricultural machine on uneven ground, so that the movement of the granules relative to the first guide means can be prioritised.

The second guide means advantageously comprises a third guide member with a rotationally symmetrical shape, such as a roller or a wheel, which is arranged to guide the granules towards the outlet member.

The third guide member is preferably rotatable.

The third guide member preferably rotates at a higher speed than the distributing member does. Alternatively, or in addition to this, the speed of rotation of the third guide member is proportional to the supply of the granules through the inlet member. Alternatively, or in addition to this, the speed of rotation of the third guide member is proportional to the speed of transportation of the agricultural machine.

At least the surface of the second guide member is advantageously flexible. In this way it is possible to obtain reliable guidance of the granules.

The distributing member is preferably a substantially flat plate, the third guide member being arranged with an annular and substantially plane surface, and the roller or wheel being arranged relative to the flat plate in such a way that that part of the annular surface which is nearest to the flat plate is substantially parallel thereto.

At least the surface layer of the distributing member is advantageously made of a material with friction-enhancing properties. In this way, a more precise guidance of the granules is obtained.

At least one nozzle is preferably arranged to spray a fluid onto the granules and is directed towards the distributing member. In this way, the granules can be dressed.

The invention will be described in more detail below with reference to the attached drawings, in which:
Figure 1 shows a device according to the invention,
Figure 2 illustrates an agricultural machine with pneumatic delivery provided with the device according to Claim 1,
Figure 3 illustrates an agricultural machine with mechanical delivery provided with the device shown in Figure 1,
Figure 4 is a partial enlargement of the agricultural machine shown in Figure 2,
Figure 5 is a side view of a first embodiment of the device,
Figure 6 is a top view of the device shown in Figure 5,
Figure 7 is a side view of the device shown in Figure 5 with alternative driving of the guide member,
Figure 8 is a top view of a second embodiment of the device,
Figure 9 is a side view of the device shown in Figure 8.

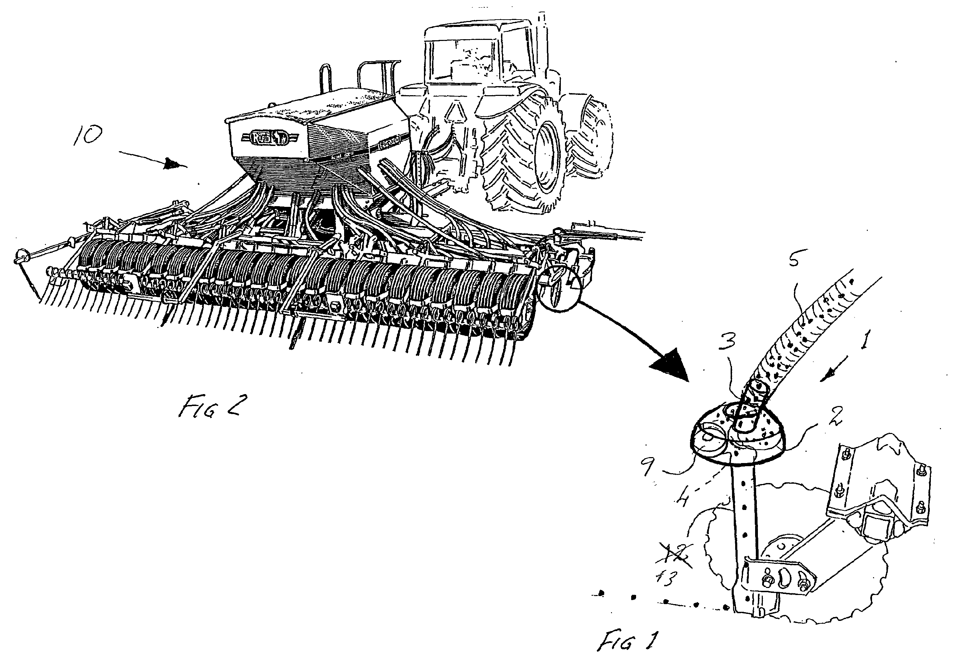

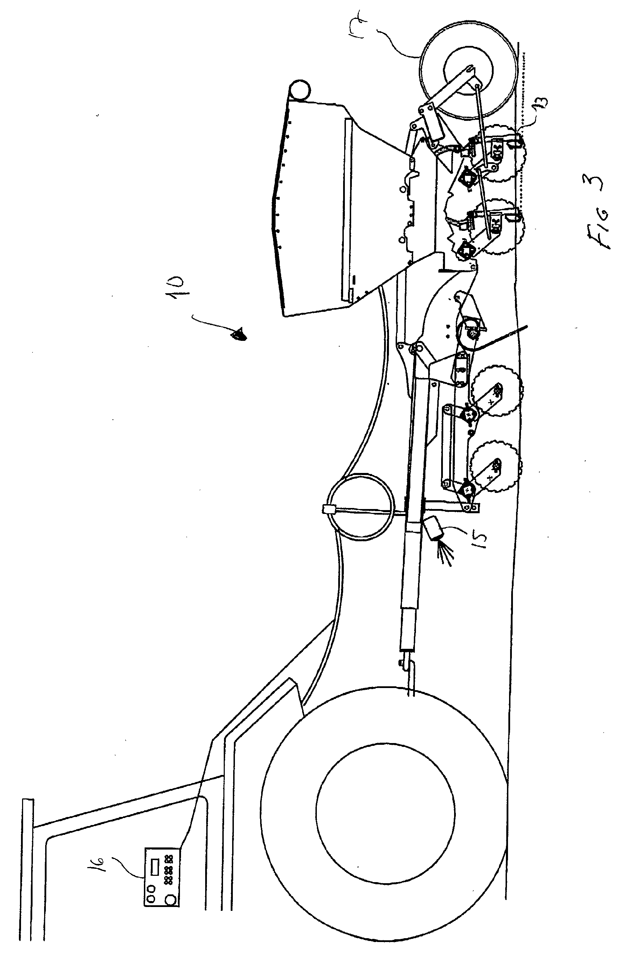

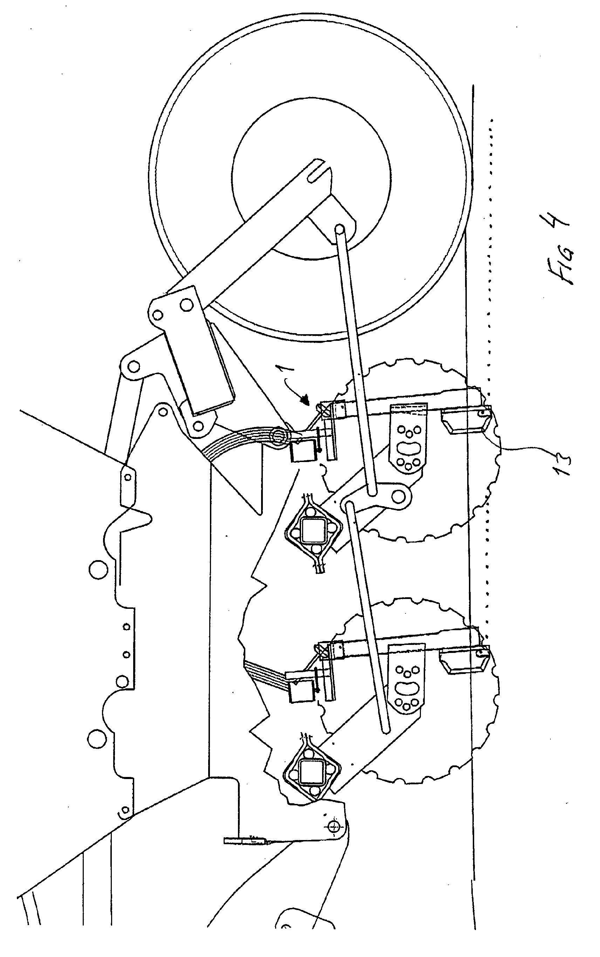

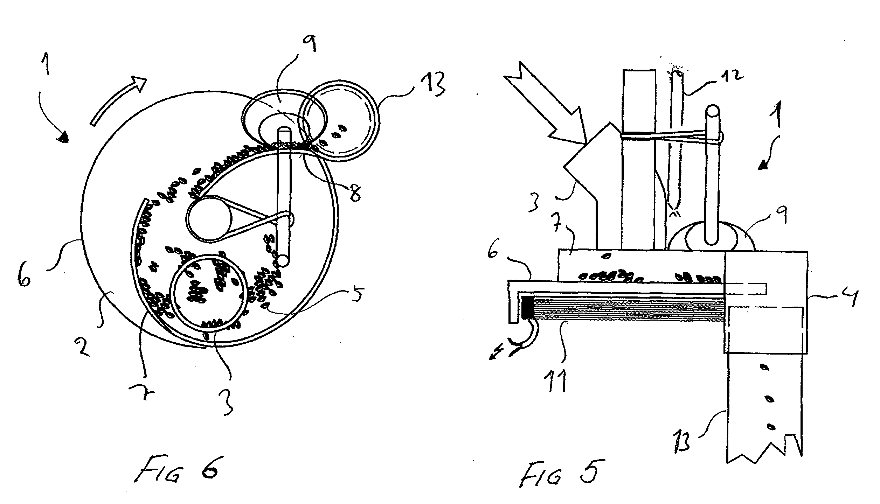

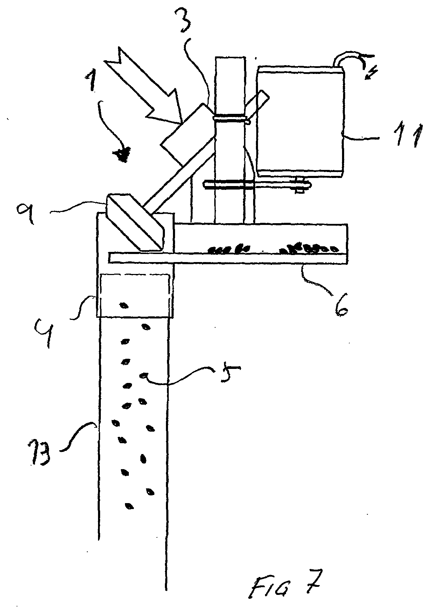

Figure 1 shows the device 1 according to the invention comprises a housing 2 forming a space. The housing 2 has an inlet member 3 and an outlet member 4 for the granules 5. A first distributing member 6 accommodated in the space receives material introduced from the inlet. The first distributing member consists of a vibrating and/or rotating plate. At least one guide element 7, 8 guides the material received on the first distributing member. A second guide element 9 in the form of a roller or a wheel distributes the material from the guide element 9 to the outlet. According to a preferred embodiment, both the distributing member 6 and the guide element 9 are rotatable. The guide element 9 preferably rotates at a higher speed than the first distributing member does. However, they can also rotate at the same speed. The speed of rotation of the distributing member 6 and of the guide element 9 is preferably proportional to the supply of material through the inlet. The speed of rotation of the distributing member 6 and guide element 9 is preferably also proportional to the drive speed of an agricultural machine 10 (see Figures 2-4) on which the device 1 is arranged.

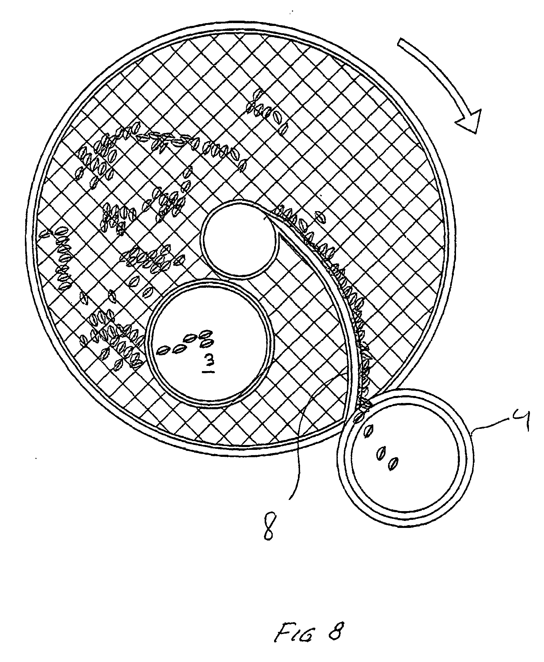

Figure 2 shows an agricultural machine with pneumatic delivery of granules, while the agricultural machine in Figure 3 has mechanical delivery. A radar 15 is directed obliquely downwards for detecting the speed of the agricultural machine relative to the ground. The radar can of course equally well be arranged on the agricultural machine according to Figure 2 or on the tractor.

In the cab of the tractor there is a control panel 16 for controlling the distribution of the granules in the soil, i.e. the distance between the granules. A computer associated with the control panel controls the distributing member 1, so that the distance between the granules is the same, irrespective of the speed of the equipment. Alternatively, or in addition to this, the speed of the agricultural machine can be detected by a wheel 17.

Figure 3 shows how the device 1 is arranged on the coulter 13.

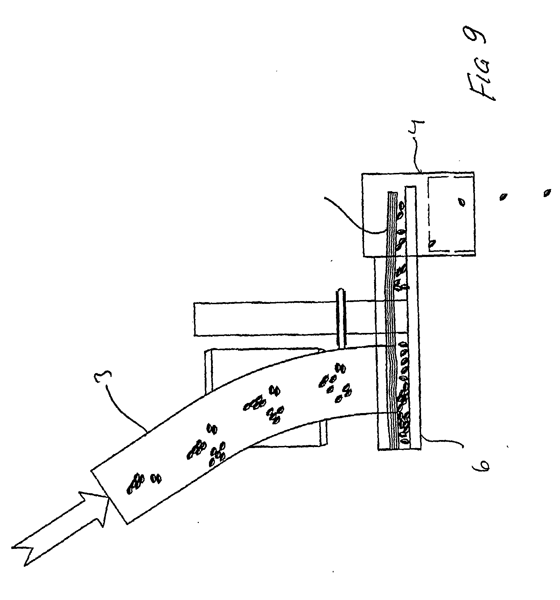

Figures 5 and 6 show a first rail and second rail arranged eccentrically relative to the axis of rotation of the distributing member 6. The first rail 7 is concave in the direction of rotation of the distributing member 6 and guides the material towards the second rail 8 which is convex in said direction of rotation. The second rail guides the granules onwards to the guide element 9. At least one driving device 11 is coupled to the distributing member 6 or to the guide element 9. The driving device 11 is in the form of a turbine, which is driven by the flow of air in a not shown line, which is connected to a pneumatic source.

In the embodiment according to Figure 2, the seeds are blown via the inlet member 3, which is connected to the pneumatic source, down onto a rotating plate arranged the housing 2. In the embodiment according to Figure 3, the granules fall down onto the plate. As the plate 6 rotates, the first rail 7 scrapes the material in front of it and places the seeds in rows, by virtue of the fact that the rail 7 is arranged eccentrically in relation to the axis of rotation of the plate 6. The second rail 8 conveys the material towards the edge for the same reason. Towards the end of the phase, the soft roller 9 presses against the granules and prevents these from moving under the effect of shaking, for example as a result of the agricultural machine travelling over uneven ground. The wheel or the roller 9 is driven faster than the rotating plate 6 and separates the individual granules from each other and conveys them onwards to the outlet member 4 and further down to the coulter.

A nozzle 12 for delivering a surface-treating agent for the material, so-called seed dressing, is arranged in the space. The guide member 9 is preferably provided with a flexible surface. The distributing member 6 is a substantially flat plate and the guide member 9 is a roller. The plate 6 can be provided with a friction-enhancing coating. The outlet from the space is designed to be coupled to a coulter 13.

Figure 7 shows an alternative embodiment of a drive device in the form of an electric motor, which can be controlled electrically for regulating the speed of rotation. The distribution can be optimised in this way.

Figures 8 and 9 show a second embodiment of the invention, in which a single convex eccentric rail 7 guides the granules to the outlet member. Arranged above the distributing member 6 and the rail 7 there is a guide member 14 in the form of a cloth, a net, a piece of foam rubber or the like, which is designed to maintain the contact of the granules with the distributing member, irrespective of the influence of external factors, such as uneven ground on which the agricultural machine is being driven. Of course, such a guide member can be arranged in connection with a distributing member 6 with two or more rails 7, 8.

The device described above is advantageously used near the ground surface (see Figure 4). The device distributes the seeds arriving in sowing hoses to the outlet member 4 from a delivery system which can be mechanical (Figure 3) or pneumatic (Figure 2).

The rotation of the distributing member 6 and/or the guide element 9 can be made proportional to the speed of travel (cf. what has been stated above in connection with Figure 3). With an electrical drive, the delivery can be stopped and started instantaneously upon lifting/lowering of the agricultural machine in order to obtain a clearly marked start of the delivery and in order to prevent loss of dressed seeds on the ground surface where birds and game can eat them. Alternatively, a press button on the control panel 16 can be used for starting and stopping.

The circular plate 6 has been described above as being rotatable. However, it can be coupled to a vibrator. In this case, the plate can of course have any suitable shape.

It has in recent times become common practice to dress the seeds during the sowing or to supply the seeds with a fluid or a powder with bacterial culture of fertiliser. It is desirable to add the fluid or powder as close to the surface of the ground as possible, since the fluid or powder is often corrosive. In this way it is possible to avoid contamination of the agricultural machine.

With the proposed device, an agent can easily be added without impairing the function of the machine or of the device. The agent is preferably added via a nozzle, which sprays the agent down towards the plate. The soft roller, which holds the seeds secure, improves the application of the agent, which largely covers the entire surface of each granule.

The device can of course be provided with more than one inlet member. Likewise, it can be provided with more than one outlet member.

The rail 7 of course does not need to be concave in its entirety, and instead it is sufficient for the part which makes contact with the granules to be concave, i.e. the guide surface. Correspondingly, it is sufficient for the guide surface of the rail 8 to be convex.

In the figures, it has been shown that the wheel or roller 9 has a plane surface, which rests against the plate 6. It can of course be rounded instead or have any other suitable shape.

## Claims

1. Apparatus for discrete distribution of granules, such as seed, fertiliser or the like, comprising at least one inlet member (3) adapted to be associated with a granules container for of an agricultural machine, and at least one outlet member (4) adapted to be associated with a coulter (13) of the agricultural machine, **characterised by** a distributing member (6) with a surface, which is arranged substantially orthogonal to a central vertical axis and which is adapted to receive granules delivered from the inlet member, and a first guide means (7, 8) arranged to guide the granules received on the distributing member (6) towards the outlet member (4), said first guide means (7, 8) being arranged eccentrically with respect to the axis in order to distribute and guide the granules towards the outlet member (4) piece by piece.

2. Apparatus according to Claim 1, wherein the distributing member (6) is rotatable about said axis, and wherein the first guide means (7, 8) is fixed relative to the inlet member (3).

3. Apparatus according to Claim 1 or 2, wherein the first guide means comprises a first guide member (8), which guides the granules towards the outlet member (4).

4. Apparatus according to Claim 3, wherein the first guide means comprises a second guide member (7), the first guide member (8) being arranged on one side of a vertical plane through the distributing member (6) along the axis, and the second guide member (7) being arranged on the other side the vertical plane.

5. Apparatus according to Claim 4, wherein the second guide member (7) guides the granules towards the first guide member (8).

6. Apparatus according to Claim 4 or 5, wherein the second guide member (7) has a concave guide surface in the direction of rotation of the distributing member (6), while the first guide member (8) has a convex guide surface in said direction of rotation.

7. Apparatus according to Claim 6, wherein the speed of rotation of the distributing member (6) is proportional to the supply of granules through the inlet (3).

8. Apparatus according to Claim 6 or 7, wherein the speed of rotation of the distributing member (6) is proportional to the speed of the agricultural machine relative to the ground.

9. Apparatus according to any of the preceding Claims, wherein the distributing member (6) is associated with a driving device for generating vibration of the distributing member (6).

10. Apparatus according to any of the preceding Claims, wherein at least one driving device (11) is associated with the distributing member (6).

11. Apparatus according to Claim 10, wherein the driving device (11) is a turbine.

12. Apparatus according to Claim 10 or 11, wherein the driving device (11) is an electric motor.

13. Apparatus according to any of the preceding Claims, wherein the distributing member (6) is a substantially circular plate.

14. Apparatus according to any of the preceding Claims, wherein a second guide means (9, 14) comprises a second guide member (14) arranged to retain the granules in the distributing member, at least in proximity to the outlet member (4).

15. Apparatus according to Claim 14, wherein the second guide member (14) covers substantially the whole surface of the distributing member (6).

16. Apparatus according to Claim 14 or 15, wherein the second guide member (14) is made of a flexible material.

17. Apparatus according to Claim 15 or 16, wherein the second guide member (14) is fixed relative to the inlet member (3).

18. Apparatus according to Claim 14, wherein the second guide means comprises a third guide member (9) with a rotationally symmetrical shape, such as a roller or a wheel, which is arranged to guide the granules towards the outlet member (4).

19. Apparatus according to Claim 18, wherein the third guide member (9) is rotatable.

20. Apparatus according to either of Claims 18 and 19, wherein at least the surface of the third guide member (9) is flexible.

21. Apparatus according to any of Claims 18-20, wherein the distributing member (6) is a substantially flat plate, the third guide member being arranged with an annular and substantially plane surface, the roller or the wheel being arranged in such a way relative to the flat plate that that part of the annular surface situated nearest to the flat plate is substantially parallel thereto.

22. Apparatus according to any of the preceding Claims, wherein at least the surface layer of the distributing member (6) is made of a material with friction-enhancing properties.

23. Apparatus according to any of the preceding Claims, wherein at least one nozzle (12), which is arranged to spray a fluid or a powder towards the granules, is directed towards the distributing member (6).

24. Agricultural machine comprising a container for granules, such as seed, fertiliser or the like, a coulter (13) for placing granules at a predetermined depth in the soil, **characterised in that** it comprises an apparatus (1) according to any of the preceding patent claims, said apparatus being associated with the container and with the coulter (13).
